(19) Europäisches Patentamt / European Patent Office / Office européen des brevets

(11) **EP 3 136 303 B1**

(12) **FASCICULE DE BREVET EUROPEEN**

(45) Date de publication et mention
de la délivrance du brevet:
**31.03.2021 Bulletin 2021/13**

(51) Int Cl.:
***G06K 19/077*** *(2006.01)*

(21) Numéro de dépôt: **16186039.0**

(22) Date de dépôt: **26.08.2016**

(54) **CARTE ET PROCÉDÉ DE FABRICATION CORRESPONDANT**

KARTE UND ENTSPRECHENDES HERSTELLUNGSVERFAHREN

CARD AND CORRESPONDING MANUFACTURING METHOD

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **27.08.2015 FR 1557984**

(43) Date de publication de la demande:
**01.03.2017 Bulletin 2017/09**

(73) Titulaire: **Ingenico Group
75015 Paris (FR)**

(72) Inventeur: **PAVAGEAU, Stéphane
26600 La Roche de Glun (FR)**

(74) Mandataire: **Vidon Brevets & Stratégie
16B, rue de Jouanet
BP 90333
35703 Rennes Cedex 7 (FR)**

(56) Documents cités:
**DE-A1- 19 939 003**

**Description**

**1. Domaine**

L'invention se rapporte au domaine général des cartes et porte plus particulièrement sur l'intégration de composants électroniques dans des cartes.

**2. Arrière-plan**

Les cartes sont aujourd'hui utilisées dans de nombreux domaines d'application. Elles sont notamment destinées à réaliser des opérations bancaires, téléphoniques, d'identification et/ou d'authentification. Ces opérations peuvent être réalisées soit en insérant la carte dans un lecteur (mode avec contact dans lequel la puce, équipé de plages de contacts électriques, de la carte entre en contact avec un lecteur), soit en lisant la piste magnétique de la carte, soit à distance (mode sans contact) par couplage électromagnétique entre une borne d'émission-réception et une antenne intégrée dans la carte, carte qui est placée dans la zone d'action de la borne. Dans ce deuxième cas, la puce de la carte n'est pas nécessairement utilisée (cela dépend des configurations).

Grâce aux avancés réalisées ces dernières années dans la conception et la fabrication des cartes, il est aujourd'hui possible d'inclure dans les cartes de nouvelles fonctionnalités, telles que par exemple des fonctionnalités d'authentification à partir d'un capteur biométrique ménagé sur la carte. De nombreux autres améliorations et développements de fonctionnalités sont à prévoir dans le futur.

Toutefois, la mise en œuvre de certaines fonctionnalités dans les cartes nécessite l'intégration dans ces dernières de composants électroniques plus ou moins complexes et dont l'encombrement est variable selon le cas. Cette intégration présente certaines difficultés dans la mesure où la majorité des cartes a l'obligation de respecter des spécifications dimensionnelles normalisées qui ne laissent que peu d'espace et de flexibilité pour intégrer des composants électroniques sur une carte.

Les cartes actuelles sont généralement conformes aux spécifications dimensionnelles prévues notamment par la norme ISO 7810. Cette norme définit les dimensions et tolérances que doit respecter une carte, en fonction de son format, pour pouvoir coopérer par contact dans de bonnes conditions avec l'ensemble des terminaux de lecture prévus à cet effet. Le non respect de cette norme peut entraîner des problèmes notables lors de l'interaction de la carte avec un terminal de lecture. Typiquement, une carte non conforme à la norme ISO 7810 risque de ne pas être détectée par le terminal de lecture ou de dégrader le fonctionnement de ce dernier, ou encore de ne pas être lue.

Le document allemand DE19939003A1 divulgue une carte d'identification fabriquée selon la technologie « moulage par injection ». Le substrat de la carte comprend intégralement une zone saillante. Cependant, le coût de fabrication de la carte est plus élevé que celui des cartes de l'état de la technique.

Les contraintes imposées par la norme ISO 7810 limitent donc à ce jour la taille et l'agencement des composants électroniques qui sont susceptibles d'être intégrés sur une carte, empêchant de ce fait la mise en œuvre de certaines fonctionnalités qui amélioreraient de façon importante l'expérience de l'utilisateur notamment.

**3. Résumé**

Un des objectifs de la présente est de remédier aux insuffisances et inconvénients de l'état de la technique.

A cet effet, la divulgation propose une carte comprenant :

- un substrat de format ID-1 selon la norme ISO 7810 ; et
- au moins un composant électronique arrangé sur le substrat, tout ou partie dudit au moins un composant électronique étant disposé dans au moins l'une des deux régions d'embossage définies dans la norme ISO 7811-1 en tant que régions dans lesquelles des caractères embossés peuvent être formés sur le substrat,
- une encapsulation de l'ensemble comprenant le substrat et ledit au moins un composant électronique ;

de sorte que l'épaisseur de la carte au niveau desdites régions d'embossage n'excède pas 1,32 mm.

Il est bien entendu que le de format ID-1 selon la norme ISO 7810 a une épaisseur inférieure à celle de la norme. Par ailleurs, l'encapsulation des composants et du substrat, permettant d'homogénéiser l'épaisseur de la carte, pour atteindre, selon les zones, 0.84mm maxi, ou 1.32mm maxi.

La technique proposée permet avantageusement d'intégrer un ou une pluralité de composants électroniques plus ou moins encombrants sur une carte, tout en garantissant la conformité de ladite carte avec les spécifications dimensionnelles définies dans les normes ISO 7810 et ISO 7811-1. En ménageant des composants électroniques au moins partiellement dans ces régions d'embossage, tout en maintenant la surépaisseur de la carte à un maximum de 0,48 mm au niveau desdites régions d'embossage, on peut avantageusement mettre en œuvre dans la carte des fonctionnalités utiles notamment pour l'utilisateur.

De plus, le respect des spécifications dimensionnelles prévues dans les normes ISO 7810 et ISO 7811-1 permet à la carte de coopérer normalement avec tous les lecteurs de carte compatibles avec le format ID-1. En particulier, l'invention permet d'éviter tous risques de dégradation du lecteur et/ou de mauvais fonctionnement de la carte avec le lecteur, résultant d'un non respect de la carte vis-à-vis des spécifications dimensionnelles requises par les normes ISO 7810 et ISO 7811-1.

L'invention permet ainsi d'intégrer des composants électroniques relativement volumineux tout en garantissant un fonctionnement optimal de la carte et du lecteur associé.

Selon un mode de réalisation particulier, les deux régions d'embossage sont délimitées respectivement par les zones 1 et 2 au sens de la norme ISO 7811-1 et présentent une hauteur de 0,48 mm.

Cette hauteur est la hauteur maximale par rapport à la surface supérieure de la carte.

Selon un mode de réalisation particulier, l'épaisseur de la carte excède 0,84 mm au niveau de tout ou partie dudit au moins un composant électronique dans l'une au moins desdites régions d'embossage.

Selon un mode de réalisation particulier, chaque composant électronique est ménagé en totalité dans l'une desdites régions d'embossage de sorte que la carte respecte les spécifications dimensionnelles définies dans les normes ISO 7810 et ISO 7811-1. La carte est ainsi apte à coopérer normalement avec tous les lecteurs compatibles avec le format ID-1.

Selon un mode de réalisation particulier, ledit au moins un composant électronique est ménagé partiellement dans une région intermédiaire située entre les deux régions d'embossage, ladite région intermédiaire s'étendant longitudinalement de sorte à être adjacente sur toute sa longueur aux deux régions d'embossage situées de part et d'autre, dans laquelle l'épaisseur de la carte au niveau de la région intermédiaire n'excède pas 1,32 mm. Il est ainsi possible de gagner encore d'avantage d'espace sur la carte pour y ménager des composants électroniques.

Selon un mode de réalisation particulier, l'épaisseur de la carte au niveau de tout ou partie dudit au moins un composant électronique est strictement supérieure à 0,84 mm dans la région intermédiaire.

Un tel mode de réalisation, peut cependant présenter des risques fonctionnels.

Selon un mode de réalisation particulier, la carte comprend :

- au moins un capteur de pression disposé à l'emplacement défini par la norme ISO 7816-1 pour les contacts externes de carte, ledit au moins un capteur de pression étant apte à générer des données de pression lorsqu'il est couplé mécaniquement à un contact de lecture complémentaire d'un terminal de lecture ; et
- un module de traitement pour déterminer, à partir desdites données de pression, une pression appliquée par chaque contact de lecture sur le capteur de pression correspondant,

dans laquelle ledit module de traitement comprend ledit au moins un composant électronique.

L'invention propose ainsi avantageusement une carte pouvant faire office de carte de dépannage dans le sens où celle-ci peut être utilisée pour tester la pression appliquée par chaque contact d'un terminal de lecture lorsque ce dernier coopère par contact avec ladite carte.

Selon un mode de réalisation particulier, la carte comprend un module d'affichage pour afficher sur la carte une information représentative de la pression appliquée par au moins un contact de lecture.

Selon un mode de réalisation particulier, le module d'affichage comprend au moins un voyant lumineux configuré pour afficher ladite information.

La divulgation propose par ailleurs un procédé de fabrication d'une carte comprenant l'arrangement d'au moins un composant électronique sur un substrat de la carte, tout ou partie dudit au moins un composant électronique étant disposé dans au moins l'une des deux régions d'embossage définies dans la norme ISO 7811-1 en tant que régions dans lesquelles des caractères embossés peuvent être formés sur le substrat, de sorte que l'épaisseur de la carte au niveau desdites régions d'embossage n'excède pas 1,32 mm.

Selon un mode de réalisation particulier, l'épaisseur de la carte excède 0,84 mm au niveau de tout ou partie dudit au moins un composant électronique dans l'une au moins desdites régions d'embossage.

Selon un mode de réalisation particulier, ledit au moins un composant électronique est disposé :

- soit en totalité dans au moins l'une des deux régions d'embossage de sorte que la carte respecte les spécifications dimensionnelles définies dans les normes ISO 7810 et ISO 7811-1 ;
- soit en partie dans une région intermédiaire située entre les deux régions d'embossage, ladite région intermédiaire s'étendant longitudinalement à la surface de la carte de sorte à être adjacente sur toute sa longueur aux deux régions d'embossage,

dans lequel l'épaisseur de la carte au niveau dudit au moins un composant électronique n'excède pas 1,32 mm dans la zone intermédiaire.

A noter que les différents modes de réalisation définis ci-avant en relation avec la carte, de même que les avantages associés à ladite carte, s'appliquent par analogie au procédé de fabrication.

A noter par ailleurs que les différents modes de réalisation mentionnés ci-dessus sont combinables entre eux pour la mise en œuvre de la présente divulgation.

## 4. Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures :

- la figure 1 est une vue en perspective représentant schématiquement la structure d'une carte à puce conventionnelle ;
- la figure 2 est une vue en perspective représentant schématiquement la structure d'une carte selon un mode de réalisation particulier ;
- la figure 3 est une vue en coupe de détail représentant schématiquement une partie de la carte illustrée en figure 2 ;
- la figure 4 est une vue en perspective représentant schématiquement la structure d'une carte selon un mode de réalisation particulier ;
- la figure 5 est une vue en coupe de détail représentant schématiquement une partie de la carte illustrée en figure 4 ;
- la figure 6 est une vue en coupe représentant schématiquement la structure d'une carte selon un mode de réalisation particulier ;
- la figure 7 représente, sous forme d'un diagramme, les principales étapes d'un procédé de fabrication de la carte illustrée en figure 6, selon un mode de réalisation particulier ; et
- la figure 8 est une vue en perspective représentant schématiquement la structure d'une carte selon un mode de réalisation particulier.

## 5. Description

Comme indiqué précédemment, l'invention porte sur l'intégration de composants électroniques dans les cartes de type carte à puce. L'invention vise plus particulièrement à réaliser une telle intégration de sorte que la carte puisse interagir normalement avec les terminaux de lecture conventionnels.

L'invention vise plus particulièrement l'intégration de composants électroniques dans les cartes de format ID-1 conformément à la norme ISO 7810.

Comme exposé préalablement, le principe général de la technique proposée réside dans l'exploitation des zones d'embossage dites « 1 » et « 2 » telles que définies dans la norme ISO 7811-1 pour intégrer au moins un composant électronique dans une carte de format ID-1 conforme à la norme ISO 7810. Pour chacune de ces zones d'embossage 1 et 2, la norme ISO 7811-1 définit une région d'embossage dans laquelle des caractères embossés peuvent être formés sur le substrat. Plus spécifiquement, la norme ISO 7811-1 autorise la formation dans lesdites zones 1 et 2 de caractères embossés d'une hauteur de relief de 0,48 mm maximum, définissant ainsi les deux régions d'embossage dans lesquelles il est autorisé de pratiquer de l'embossage sur la carte.

La présente technique propose d'utiliser à bon escient les deux régions d'embossage prévues par la norme ISO 7811-1 pour ménager sur une carte un ou une pluralité de composants électroniques et ce, tout en s'assurant que ladite carte respecte totalement, ou quasi-totalement, les spécifications dimensionnelles prévues dans les normes ISO 7810 et ISO 7811-1. Le respect (total ou quasi-total) des normes ISO 7810 et ISO 7811-1 permet avantageusement à la carte d'être apte à coopérer normalement avec la majorité des terminaux de lecture actuels.

D'autres aspects et avantages de la présente divulgation ressortiront des exemples de réalisation décrits ci-dessous en référence aux dessins mentionnés ci-avant.

Sauf indications contraires, les éléments communs ou analogues à plusieurs figures portent les mêmes signes de référence et présentent des caractéristiques identiques ou analogues, de sorte que ces éléments communs ne sont généralement pas à nouveau décrits par souci de simplicité.

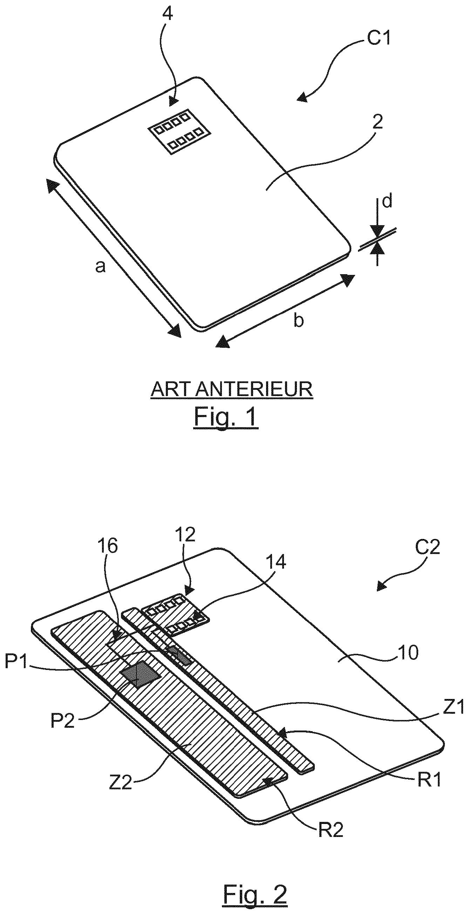

La **figure 1** représente schématiquement une carte à puce C1 conventionnelle de format ID-1 conforme aux spécifications dimensionnelles prévues dans la norme ISO 7810.

La carte à puce C1 comprend un substrat 2 sur lequel est ménagé un module 12 muni de contacts externes. Comme représenté en **figure 1**, la carte à puce C1 présente ici notamment des dimensions a, b et d telles que définies dans la norme ISO 7810. Conformément à cette norme, l'épaisseur d de la carte C1 doit être inférieure ou égale à dmax = 0,84 mm (millimètres). Plus spécifiquement, L'épaisseur doit être comprise entre 0,68 et 0,84 mm.

La **figure 2** représente schématiquement la structure d'une carte C2 conforme à un mode de réalisation particulier. On notera que certains constituants faisant généralement partie d'une carte ont été volontairement omis car ils ne sont pas nécessaires à la compréhension de la présente.

La carte C2 présente un format ID-1 conforme aux spécifications dimensionnelles prévues dans la norme ISO 7810. Plus particulièrement, la carte C2 comprend ici un substrat 10 sur lequel est arrangé un module 12 comportant des contacts externes 14 aptes à coopérer avec les contacts de lecture d'un lecteur externe correspondant. Typiquement, une puce électronique (non représentée) est montée sur la face du module 12 opposée aux contacts externes 14.

En **figure 2**, sont également représentées les zones d'embossage Z1 et Z2 à la surface du substrat 10. Ces zones Z1, Z2 correspondent respectivement aux zones 1 et 2 telles que définies dans la norme ISO 7811-1, zones dans lesquelles il est autorisé par ladite norme de réaliser des embossages dans certaines limites dimensionnelles.

Ainsi, conformément à la norme ISO 7811-1 :

- la zone d'embossage Z1 constitue une « ligne de numéro d'identification » dans laquelle il est possible de faire figurer un numéro d'identification de la carte ;
- la zone d'embossage Z2 constitue une zone dans laquelle il est possible de faire figurer des informations relatives à l'identité du porteur de la carte, telles que le nom, l'adresse et toutes autres informations pertinentes.

La norme ISO 7811-1 exige que la hauteur de relief (ou épaisseur) de chaque caractère embossé dans les zones dites 1 et 2 (i.e. les zones Z1 et Z2 représentées en **figure 2**) n'excède pas 0,48 mm. Autrement dit, il est possible, conformément à cette norme, de pratiquer des embossages sur la carte C2 dans des régions d'embossage R1 et R2 définies par les zones d'embossage respectives Z1, Z2 et par une hauteur e2 = 0.48 mm.

Dans ce mode de réalisation, la carte C2 comprend un premier composant électronique P1 disposé dans la région d'embossage R1 et un deuxième composant électronique P2 disposé dans la région d'embossage R2. On comprendra que le nombre, les dimensions et l'agencement des composants électroniques peuvent être adaptés selon le contexte d'utilisation sans départir de la présente technique. En particulier, des variantes sont possibles avec un seul composant électronique ménagé sur le substrat, dans la région d'embossage R1 ou R2 selon le cas.

La **figure 2** représente schématiquement une connexion électrique 16 reliant électriquement le module 12 à chacun des composants électroniques P1 et P2.

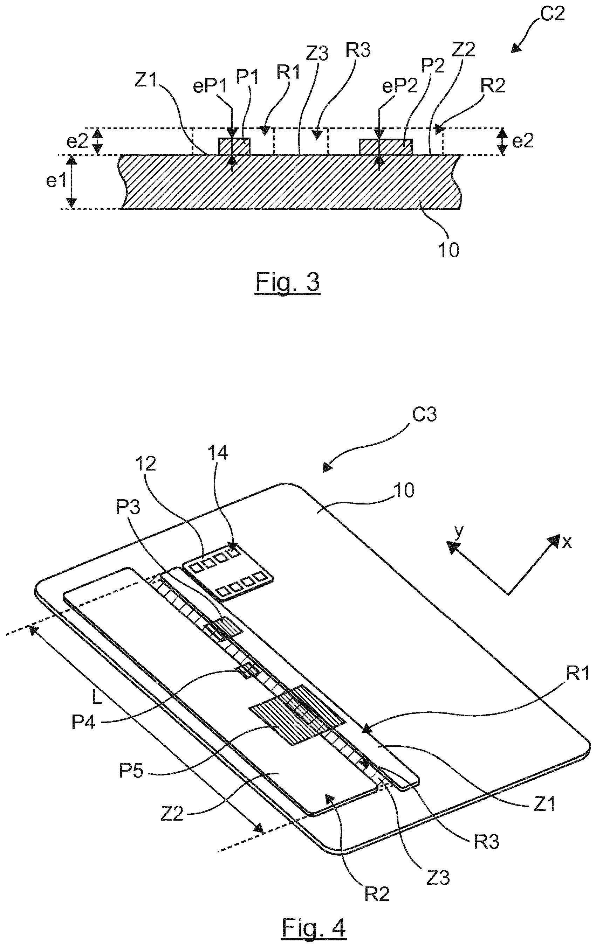

Comme illustré dans la vue en coupe de la **figure 3,** les composants électroniques P1 et P2 sont disposés respectivement dans les régions d'embossage R1 et R2. Comme déjà indiqué, les régions d'embossage R1 et R2 sont définies par les zones d'embossage respectives Z1, Z2 et par une hauteur e2 = 0.48 mm.

Comme indiqué ci-avant, la carte C2 présente un format ID-1 conforme aux spécifications dimensionnelles prévues dans la norme ISO 7810. En conséquence, l'épaisseur e1 du substrat 10 est comprise entre 0,68 mm et 0,84 mm (**figure 3**).

Toujours dans cet exemple, les composants électroniques P1 et P2 présentent respectivement les épaisseurs eP1 et eP2 qui sont telles que :

$$0 < eP1 \leq e2$$

$$0 < eP2 \leq e2$$

dans lequel e2 est la hauteur des régions d'embossage R1 et R2 telle que définies dans la norme ISO 7811-1.

Selon un mode de réalisation particulier, l'épaisseur (e1 + e2) de la carte C2 excède 0,84 mm au niveau de l'un au moins des composants électroniques disposé dans l'une ou l'autre des régions d'embossage R1, R2.

Par ailleurs, dans le mode de réalisation envisagé ici, les composants électroniques P1 et P2 sont chacun inclus totalement dans les régions d'embossage R1 et R2, respectivement. Comme indiqué par la suite, des variantes sont envisageables dans lesquelles chaque composant électronique peut, dans une certaine mesure, être ménagé partiellement à l'extérieur de sa région d'embossage.

Conformément à ce mode de réalisation, chaque composant électronique est disposé de sorte que l'épaisseur (e1 + e2) de la carte C2 au niveau des régions d'embossage R1, R2 n'excède jamais 1,32 mm (conformément à la norme ISO 7811-1). Pour ce faire, dans cet exemple particulier, l'épaisseur eP1, eP2 des composants électroniques P1, P2 n'excède pas la hauteur e2 = 0,48 mm des région d'embossage.

Selon une variante, chaque composant électronique P1, P2 peut s'étendre en profondeur dans l'épaisseur du substrat 10 (en dehors des régions d'embossage R1, R2 proprement dites) tout en conservant une partie dudit composant présente dans l'une des régions d'embossage R1, R2, étant entendu que l'épaisseur de la carte 10 au niveau des régions d'embossage R1, R2 n'excède pas 1,32 mm.

A noter que, dans ce document, on fait référence à l'arrangement de « composants électroniques » au sens général du terme. Un composant électronique au sens de la présente technique peut être un quelconque composant électronique destiné à réaliser ou à participer à la réalisation d'une fonction électronique. De nombreux types de composants électroniques peuvent être envisagés, y compris des composants optoélectroniques ou électromécaniques.

En particulier, un composant électronique selon l'invention peut être un composant discret, actif ou passif, ou un module comprenant une pluralité de composants électroniques (circuits intégrés etc.). On peut en particulier envisager d'intégrer au moins l'un des composants électroniques suivants dans une carte conforme à l'invention :

- un composant de type interface homme/machine (clavier, commutateur, afficheur, capteur biométrique...) ;
- capteur de type quelconque (capteur de pression, capteur d'usure...).

L'invention permet avantageusement d'intégrer un ou une pluralité de composants électroniques plus ou moins encombrants sur une carte, tout en garantissant la conformité de ladite carte avec les spécifications dimensionnelles définies dans les normes ISO 7810 et ISO 7811-1. En ménageant des composants électroniques au moins partiellement dans les régions d'embossage R1 et R2, tout en maintenant l'épaisseur de la carte à un maximum de 0,48 mm au niveau desdites régions d'embossage R1 et R2, on peut avantageusement mettre en œuvre des fonctionnalités utiles notamment pour l'utilisateur, un tiers et/ou l'émetteur de la carte.

De plus, le respect des spécifications dimensionnelles prévues dans les normes ISO 7810 et ISO 7811-1 permet à la carte de coopérer normalement avec tous les lecteurs de carte compatibles avec le format ID-1. En particulier, l'invention permet d'éviter tous risques de dégradation du lecteur et/ou de mauvais fonctionnement de la carte avec le lecteur, résultant d'un non respect de la carte vis-à-vis des spécifications dimensionnelles requises par les normes ISO 7810 et ISO 7811-1.

Il est ainsi possible d'intégrer des composants électroniques relativement volumineux tout en garantissant un fonctionnement optimal de la carte avec le lecteur.

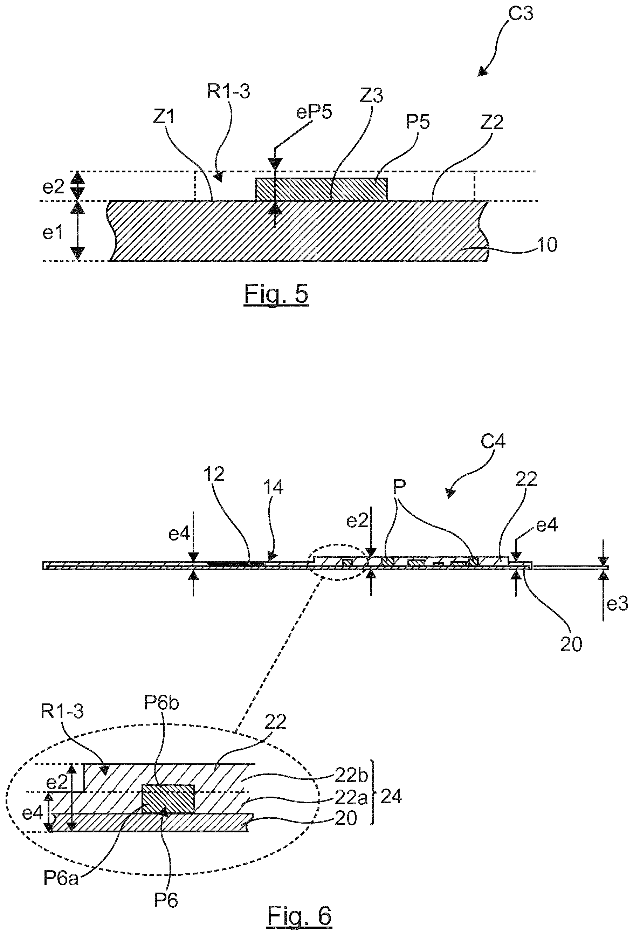

Une carte C3, selon une variante de la carte C2 décrite ci-avant, est à présent décrite en référence aux **figures 4** et **5**.

Plus particulièrement, la **figure 4** est une vue en perspective représentant schématiquement la structure de la carte C3. La carte C3 diffère uniquement de la carte C2 dans la manière dont les composants électroniques sont agencés vis-à-vis des zones d'embossage Z1 et Z2 (et donc des régions d'embossage R1 et R2) telles que définies dans la norme ISO 7811-1.

Dans cet exemple, la carte C3 comprend trois composants électroniques P3, P4 et P5 disposés sur le substrat 10. On comprendra ici aussi que le nombre, les dimensions et l'agencement des composants électroniques peuvent être adaptés suivant le cas sans départir du cadre de la présente technique.

Par souci de clarté, les éventuelles connexions électriques entre le module 12 et les composants P3-P5 (ou entre les composants entre eux) n'ont pas été représentées sur la **figure 4.**

La **figure 4** représente également une zone intermédiaire Z3 située entre les zones d'embossage Z1 et Z2 définies ci-avant. La zone intermédiaire Z3 est une zone s'étendant longitudinalement de sorte à être adjacente sur toute sa longueur aux deux zones d'embossage Z1, Z2 situées de part et d'autre.

Une région intermédiaire R3, située entre les régions d'embossage R1 et R2, est définie par la zone intermédiaire Z3 et par une hauteur égale à la hauteur e2 des régions d'embossage R1 et R2.

La **figure 5** est une vue en coupe de détail représentant plus particulièrement, de façon schématique, l'arrangement du composant électronique P5 sur le substrat 10.

Dans ce mode de réalisation particulier, les composants électroniques P3, P4, P5 sont chacun ménagé en partie dans l'une au moins des régions d'embossage R1 et R2, et en partie dans la région intermédiaire R3 située entres les régions d'embossage R1, R2. Comme représenté en **figure 4** (cf. aussi la **figure 3**), cette région intermédiaire R3 s'étend longitudinalement (suivant x) de sorte à être adjacente sur toute sa longueur aux deux régions d'embossage R1, R2 situées de part et d'autre.

De façon purement illustrative, l'agencement des composants électroniques est ici réalisé de la manière suivante :

- le composant électronique P3 est disposé en partie dans la région d'embossage R1 et en partie dans la région intermédiaire R3 ;
- le composant électronique P4 est disposé en partie dans la région d'embossage R2 et en partie dans la région intermédiaire R3 ; et
- le composant électronique P5 s'étend dans les régions R1, R2 et R3.

On peut en outre envisager de ménager au moins un composant électronique en totalité dans la région intermédiaire R3.

Comme illustré en **figure 4**, dans le mode de réalisation envisagé ici, la région intermédiaire R3 est délimitée longitudinalement par le chevauchement longitudinal L (suivant x) des deux régions d'embossage R1, R2. On comprendra que des variantes sont envisageables dans lesquelles cette région intermédiaire R3 ne s'étend longitudinalement que sur une partie du chevauchement L suivant x.

Dans un mode de réalisation particulier, chaque composant électronique est arrangé de sorte que l'épaisseur de la carte C3 au niveau de la région intermédiaire R3 n'excède pas 1,32 mm.

Selon le mode de réalisation envisagé ici, l'épaisseur de la carte C3 au niveau de tout ou partie de chaque composant P3, P4, P5 est strictement supérieure à 0,84 mm dans la région intermédiaire R3.

Dans un mode de réalisation particulier, l'épaisseur eP5 du composant électronique P5 (et plus généralement de chaque composant électronique dans la région intermédiaire R3) est telle que :

$$0 < eP5 \leq e2$$

L'invention permet avantageusement de ménager des composants électroniques dans une région notée R1-3 (**figure 5**) formée par la combinaison des régions d'embossage R1, R2 et de la région intermédiaire R3 telles que définies ci-avant. L'arrangement de tout ou partie d'un composant électronique dans la région intermédiaire R3 d'une carte entraîne la non conformité de ladite carte avec les spécifications dimensionnelles requises dans les normes ISO 7811-1 et ISO 7810. En effet, cette norme ne prévoit pas d'autoriser la formation de caractères par embossage dans la zone Z3. Toutefois, cette variante est avantageuse en ce que la carte est malgré tout compatible avec la majorité des lecteurs de carte. Il a été observé que la présence de composants électroniques dans la région intermédiaire R3 ne risque pas d'endommager le lecteur ou de conduire à des défaillances lors des interactions entre la carte et le lecteur. Cette variante offre en outre un plus grand espace sur la carte, et donc une plus grande liberté, pour intégrer des composants électroniques sur ladite carte. Des fonctionnalités avantageuses peuvent ainsi être mises en œuvre dans une carte.

A noter que, dans les différents modes de réalisation, la carte peut comprendre si besoin au moins un élément (un matériau d'encapsulation tel que de la résine par exemple) autre que les composants électroniques remplissant au moins partiellement l'une au moins parmi les régions d'embossage R1, R2 et la région intermédiaire R3. Cette encapsulation est optionnelle. Certains modes de réalisation ne nécessitent pas la présence d'une telle encapsulation. Pour les besoins de la présente on précise qu'une encapsulation est une opération permettant d'enrober un objet d'un revêtement destiné soit à modifier les propriétés des surfaces de l'objet enrobé, soit à protéger celui-ci contre les influences extérieures.

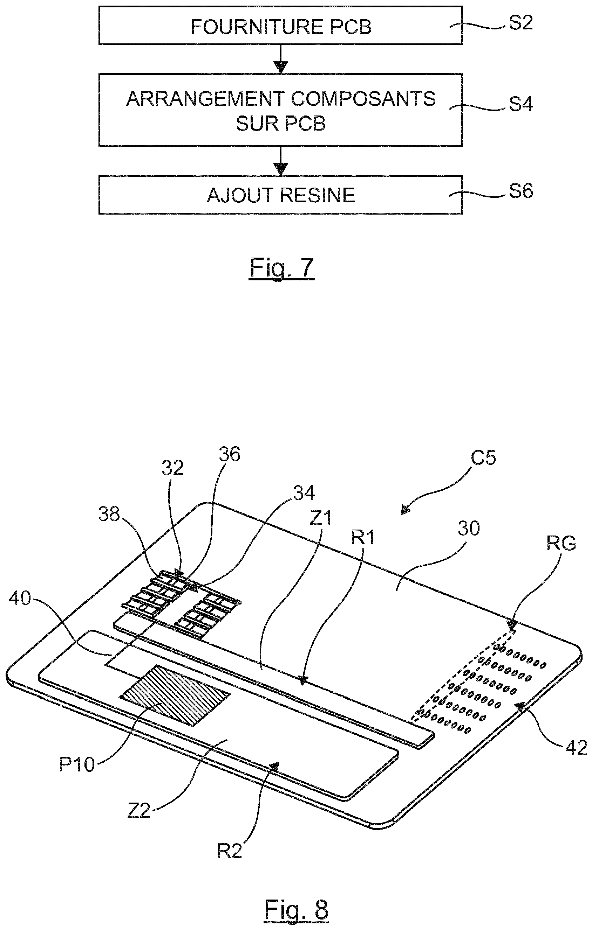

Un procédé de fabrication d'une carte C4 est à présent décrit en référence aux **figures 6** et **7**, selon un mode de réalisation particulier.

Comme représenté dans le diagramme de la **figure 7**, on réalise (ou on fournit) en S2 un support 20 de type PCB (pour « *Printed Card Board* ») par exemple. En variante, le support 20 est un circuit imprimé flexible (ou FPC pour « Flexible Printed Circuit ») ou tout autre type de support approprié pour réaliser une carte équipée d'un ou plusieurs composants électroniques.

Le support 20 présente dans cet exemple une épaisseur e3 = 0,30 mm.

Un module 12 comportant des contacts externes 14 est par ailleurs arrangé sur le support 20. L'épaisseur de ce module n'excède pas 0,4 mm.

Des composants électroniques P sont ensuite montés (S4) (par soudure ou tout autre méthode appropriée) à la surface du support 20. Chaque composant électronique P est disposé dans l'une ou plusieurs parmi les zones Z1, Z2 et Z3 telles que définies ci-avant.

Dans cet exemple, chaque composant électronique P présente une épaisseur (ou hauteur) maximale de 0,9 mm.

En S6, un matériau d'encapsulation 22 (une résine par exemple) est déposé (ou formé) sur le support 20 de sorte à ce que :

- les contacts externes 14 soient affleurant à la surface de la carte 4 afin qu'ils puissent coopérer avec les contacts de lecture d'un lecteur externe ;
- chaque composant électronique P soit disposé dans la région R1-3 telle que définie ci-avant

Chaque composant P est ainsi affleurant à la surface de la région R1-3 ou recouvert au moins partiellement par le matériau 22.

L'application du matériau d'encapsulation 22 peut, par exemple, être réalisé par surmoulage et/ou par l'ajout d'un film à la surface du support 20.

Comme représenté en **figure 6**, la couche supérieure 22b du matériau 22 (d'épaisseur e2 = 0,4 mm) forme la région R1-3 dans laquelle le composant électronique P6 notamment s'étend partiellement. Comme illustré en **figure 6**, la partie supérieure P6 du composant électronique P6 est disposée dans la région R1-3 tandis que la partie inférieure P6a dudit composant est disposée dans la couche inférieure 22a du matériau 22, sous la couche supérieure 22b.

Le support 20 et les couches 22a et 22b forment ensemble le substrat 24 de la carte C4.

La couche inférieure 22a recouvrant ici la totalité de la face supérieure du support 20 (à l'exception des contacts externes 14) présente une épaisseur e4 de 0,42 mm dans cet exemple.

De façon avantageuse, l'un au moins des composants électroniques P présente une épaisseur supérieure à l'épaisseur e4 de la couche inférieure 22a. La région 1-3 (formée par la couche 22b) située au-dessus d'une partie de la couche 22a offre ainsi la possibilité de ménager des composants électroniques relativement volumineux tout en permettant à la carte de fonctionner normalement avec les lecteurs conventionnels.

En variante, on peut réaliser la carte C4 de sorte que la région intermédiaire R3 telle que définie ci-avant ne soit pas occupée (c'est-à-dire dépourvu dance cette région de tout matériau, composant...), de sorte à respecter totalement les spécifications dimensionnelles prévues dans la norme ISO 7811-1.

Une carte C5 conforme à un mode de réalisation particulier est à présent décrite en référence à la **figure 8.**

La carte C5 présente un format ID-1 conforme aux spécifications dimensionnelles prévues dans la norme ISO 7810. Plus particulièrement, la carte C5 comprend un substrat 30, ce dernier comprenant sur sa face supérieure au moins un capteur de pression 32 (au nombre de 8 dans cet exemple) disposé à l'emplacement défini par la norme ISO 7816-1 pour au moins l'un des contacts externes de carte. Chaque capteur de pression 32 est apte, lorsqu'il est couplé mécaniquement à un contact de lecture complémentaire d'un terminal de lecture, à générer des données de pression représentatives de la pression (ou force) appliquée par ledit contact de lecture sur le capteur de pression 32 en question.

Dans cet exemple particulier, chaque capteur de pression 32 comprend une lame flexible 34 comportant sur sa face supérieure une zone d'appui 36 destinée à rentrer en contact avec le contact de lecture du lecteur lorsque la carte C5 et le lecteur coopèrent ensemble. Une jauge de pression 38 est en outre ménagée sur chaque lame flexible 34 afin de générer des données électriques représentatives de la pression appliquée par un contact de lecture sur le capteur de pression 32 en question. D'autres manières de réaliser le capteur de pression 32 peuvent toutefois être envisagées sans départir du cadre de la présente technique.

La carte C5 comprend également un module de traitement P10 apte à déterminer, à partir des données de pression reçues des capteurs de pression 32 (via la ligne 40 dans cet exemple), la pression appliquée par chaque contact de lecture sur le capteur de pression correspondant. L'homme du métier saurait déterminer la manière la plus appropriée de mettre en œuvre un tel module de traitement P10.

De façon avantageuse, le module électronique P10 est disposé dans la région d'embossage R2 telle que définie dans la norme ISO 7811-1, de façon analogue au composant électronique P2 représenté en **figure** 2. Des variantes de positionnement vis-à-vis des régions d'embossage R1, R2 et de la région intermédiaire R3 telles que définies précédemment sont bien entendu envisageables de manière analogue aux modes de réalisation décrits ci-avant.

La carte C5 comprend en outre un module d'affichage 42 pour afficher une information représentative de la pression appliquée par au moins un contact de lecture. Dans cet exemple, le module d'affichage 42 est formé d'une pluralité de voyants lumineux (de type LED par exemple) aptes à indiquer des informations relatives à la pression détectée par chaque capteur de pression 32.

Selon un exemple particulier, les voyants lumineux 42 sont contrôlés par le module électronique P10 pour afficher le niveau de pression détecté sur chaque capteur de pression 32.

Dans cet exemple particulier, les voyants lumineux 42 sont disposés suivant une grille constituée de rangées RG de voyants lumineux, chaque rangée RG comprenant un groupe de voyants lumineux 42 apte à afficher un niveau de pression détecté par un capteur de pression 32 correspondant. En variante, un seul voyant lumineux est associé à chaque capteur de pression 32, ledit voyant étant apte à émettre une couleur, une intensité et/ou une fréquence de clignotement appropriés en fonction de la pression détectée par le capteur de pression 32 correspondant.

On comprendra que le type, le nombre, l'agencement des voyants lumineux, et plus généralement la manière dont le module d'affichage affiche les informations de pression, peuvent être adaptés selon le cas sans départir du cadre de la présente technique.

Une carte selon ce mode de réalisation particulier permet avantageusement de tester la force appliquée par les différents contacts d'un lecteur lorsque celui-ci coopère par contact avec une carte. Typiquement, un contact de lecture applique en fonctionnement normal une pression d'au minimum 20 g et d'au maximum 60g. Un opérateur peut avantageusement utiliser une telle carte comme carte de dépannage afin de vérifier que les contacts de lecture d'un lecteur appliquent une force satisfaisante sur la carte lorsque cette dernière est insérée dans le lecteur. Une telle carte permet de déterminer rapidement et de façon fiable si un contact de lecture d'un lecteur est défectueux. De façon avantageuse, l'exploitation de l'une au moins des régions R1, R2 et R3 telles que définies ci-avant offre l'espace suffisant sur la carte pour y intégrer le module de traitement des capteurs de pression. Grâce à l'invention, il est possible d'intégrer une fonctionnalité de test de pression dans une carte tout en respectant les exigences dimensionnelles définies dans les normes ISO 7810 et ISO 7811-1.

Un homme du métier comprendra que les modes de réalisation et variantes décrits ci-avant ne constituent que des exemples non limitatifs. En particulier, l'homme du métier pourra envisager une quelconque combinaison des variantes et modes de réalisation décrits ci-avant afin de répondre à un besoin bien particulier.

## Revendications

1. Carte (C2 ; C3 ; C4 ; C5) comprenant :

   - un substrat (10 ; 30) de format ID-1 selon la norme ISO 7810 ; et
   - au moins un composant électronique (P1-P2 ; P3-P5 ; P6 ; P10) arrangé sur le substrat, tout ou partie dudit au moins un composant électronique étant disposé dans au moins l'une des deux régions d'embossage (R1, R2) définies dans la norme ISO 7811-1 en tant que régions dans lesquelles des caractères embossés peuvent être formés sur le substrat ;

   carte **caractérisée en ce qu'**elle comprend :

   - une encapsulation de l'ensemble comprenant le substrat (10 ; 30) et ledit au moins un composant électronique (P1-P2 ; P3-P5 ; P6 ; P10) ; de sorte que l'épaisseur de la carte au niveau desdites régions d'embossage n'excède pas 1,32 mm.

2. Carte selon la revendication 1, dans laquelle les deux régions d'embossage (R1, R2) sont délimitées respectivement par les zones 1 et 2 (Z1, Z2) au sens de la norme ISO 7811-1 et présentent une hauteur (e2) de 0,48 mm.

3. Carte selon la revendication 1 ou 2, l'épaisseur de la carte excédant 0,84 mm au niveau de tout ou partie dudit au moins un composant électronique (P1-P2 ; P3-P5 ; P6 ; P10) dans l'une au moins desdites régions d'embossage (R1, R2).

4. Carte (C2 ; C5) selon l'une quelconque des revendications 1 à 3, dans laquelle chaque composant électronique (P1-P2 ; P10) est ménagé en totalité dans l'une desdites régions d'embossage (R1, R2) de sorte que la carte respecte les spécifications dimensionnelles définies dans les normes ISO 7810 et ISO 7811-1.

5. Carte (C3) selon l'une quelconque des revendications 1 à 3, dans laquelle ledit au moins un composant électronique (P3-P5) est ménagé partiellement dans une région intermédiaire (R3) située entre les deux régions d'embossage (R1, R2), ladite région intermédiaire s'étendant longitudinalement de sorte à être adjacente sur toute sa longueur aux deux régions d'embossage situées de part et d'autre, dans laquelle l'épaisseur de la carte au niveau de la région intermédiaire n'excède pas 1,32 mm.

**6.** Carte selon la revendication 5, dans laquelle l'épaisseur de la carte au niveau de tout ou partie dudit au moins un composant électronique (P3-P5) est strictement supérieure à 0,84 mm dans la région intermédiaire (R3).

**7.** Carte (C5) selon l'une quelconque des revendications 1 à 6, comprenant :

- au moins un capteur de pression (32) disposé à l'emplacement défini par la norme ISO 7816-1 pour les contacts externes de carte, ledit au moins un capteur de pression étant apte à générer des données de pression lorsqu'il est couplé mécaniquement à un contact de lecture complémentaire d'un terminal de lecture ; et
- un module de traitement (P10) pour déterminer, à partir desdites données de pression, une pression appliquée par chaque contact de lecture sur le capteur de pression (32) correspondant,

dans laquelle ledit module de traitement comprend ledit au moins un composant électronique.

**8.** Carte selon la revendication 7, comprenant un module d'affichage (42) pour afficher sur la carte (C5) une information représentative de la pression appliquée par au moins un contact de lecture.

**9.** Carte selon la revendication 8, dans laquelle le module d'affichage (42) comprend au moins un voyant lumineux configuré pour afficher ladite information.

**10.** Procédé de fabrication d'une carte (C4) comprenant l'arrangement d'au moins un composant électronique (P, P5) sur un substrat (24) de la carte, tout ou partie (P6B) dudit au moins un composant électronique (P5) étant disposé dans au moins l'une des deux régions d'embossage définies dans la norme ISO 7811-1 en tant que régions dans lesquelles des caractères embossés peuvent être formés sur le substrat, ledit procédé étant **caractérisé en ce qu'**il comprend une étape d'encapsulation de l'ensemble comprenant le substrat (C4) et ledit au moins un composant électronique (P, P5), de sorte que l'épaisseur de la carte au niveau desdites régions d'embossage n'excède pas 1,32 mm.

**11.** Procédé de fabrication selon la revendication 10, dans lequel l'épaisseur de la carte excède 0,84 mm au niveau de tout ou partie dudit au moins un composant électronique (P) dans l'une au moins desdites régions d'embossage.

**12.** Procédé de fabrication selon la revendication 10 ou 11, dans lequel ledit au moins un composant électronique (P) est disposé :

- soit en totalité dans au moins l'une des deux régions d'embossage de sorte que la carte respecte les spécifications dimensionnelles définies dans les normes ISO 7810 et ISO 7811-1;
- soit en partie dans une région intermédiaire située entre les deux régions d'embossage, ladite région intermédiaire s'étendant longitudinalement à la surface de la carte de sorte à être adjacente sur toute sa longueur aux deux régions d'embossage,

dans lequel l'épaisseur de la carte au niveau dudit au moins un composant électronique (P) n'excède pas 1,32 mm dans la zone intermédiaire.

**Patentansprüche**

**1.** Karte (C2; C3; C4; C5), umfassend:

- ein Substrat (10; 30) im ID-1-Format gemäß der Norm ISO 7810 und
- mindestens eine elektronische Komponente (P1-P2; P3-P5; P6; P10), die auf dem Substrat angeordnet ist, wobei die gesamte oder ein Teil der mindestens einen elektronischen Komponente in mindestens einem der zwei Prägebereiche (R1, R2) angeordnet ist, die in der Norm ISO 7811-1 als Bereiche definiert sind, in denen geprägte Zeichen auf dem Substrat gebildet werden können,

Karte, die **dadurch gekennzeichnet, dass** sie aufweist:

- eine Einkapselung der Anordnung, umfassend das Substrat (10; 30) und die mindestens eine elektronische Komponente (P1-P2; P3-P5; P6; P10), derart, dass die Dicke der Karte an den Prägebereichen 1,32 mm nicht überschreitet.

**2.** Karte nach Anspruch 1, wobei die zwei Prägebereiche (R1, R2) jeweils durch die Zonen 1 und 2 (Z1, Z2) im Sinne der Norm ISO 7811-1 begrenzt sind und eine Höhe (e2) von 0,48 mm aufweisen.

**3.** Karte nach Anspruch 1 oder 2, wobei die Dicke der Karte an der gesamten oder einem Teil der mindestens einen elektronischen Komponente (P1-P2; P3-P5; P6; P10) in mindestens einem der Prägebereiche (R1, R2) 0,84 mm überschreitet.

**4.** Karte (C2; C5) nach einem der Ansprüche 1 bis 3, wobei jede elektronische Komponente (P1-P2; P10) vollständig in einem der Prägebereiche (R1, R2) derart angeordnet ist, dass die Karte die Abmessungsspezifikationen, die in den Normen ISO 7810 und ISO 7811-1 definiert sind, einhält.

5. Karte (C3) nach einem der Ansprüche 1 bis 3, wobei die mindestens eine elektronische Komponente (P3-P5) teilweise in einem Zwischenbereich (R3) angeordnet ist, der sich zwischen den zwei Prägebereichen (R1, R2) befindet, wobei sich der Zwischenbereich in Längsrichtung derart erstreckt, um über seine gesamte Länge angrenzend an den zwei Prägebereichen zu sein, die beiderseits angeordnet sind, wobei die Dicke der Karte an dem Zwischenbereich 1,32 mm nicht überschreitet.

6. Karte nach Anspruch 5, wobei die Dicke der Karte an der gesamten oder einem Teil der mindestens einen elektronischen Komponente (P3-P5) in dem Zwischenbereich (R3) strikt größer als 0,84 mm ist.

7. Karte (C5) nach einem der Ansprüche 1 bis 6, umfassend:

   - mindestens einen Drucksensor (32), der an der Stelle angeordnet ist, die von der Norm ISO 7816-1 für die externen Kontakte der Karte definiert ist, wobei der mindestens eine Drucksensor geeignet ist, Druckdaten zu generieren, wenn er mechanisch mit einem Lesekontakt verbunden ist, der zu einem Leseendgerät komplementär ist, und
   - ein Verarbeitungsmodul (P10), um ausgehend von den Druckdaten einen Druck zu bestimmen, der von jedem Lesekontakt auf den entsprechenden Drucksensor (32) ausgeübt wird, wobei das Verarbeitungsmodul die mindestens eine elektronische Komponente aufweist.

8. Karte nach Anspruch 7, umfassend ein Anzeigemodul (42), um auf der Karte (C5) eine Information anzuzeigen, die für den Druck repräsentativ ist, der von mindestens einem Lesekontakt ausgeübt wird.

9. Karte nach Anspruch 8, wobei das Anzeigemodul (42) mindestens eine Leuchtanzeige aufweist, die konfiguriert ist, um die Information anzuzeigen.

10. Verfahren zur Herstellung von einer Karte (C4), umfassend die Anordnung von mindestens einer elektronischen Komponente (P, P5) auf einem Substrat (24) der Karte, wobei die gesamte oder ein Teil (P6B) der mindestens einen elektronischen Komponente (P5) in mindestens einem der zwei Prägebereiche angeordnet wird, die in der Norm ISO 7811-1 als Bereiche definiert sind, in denen geprägte Zeichen auf dem Substrat gebildet werden können, wobei das Verfahren **dadurch gekennzeichnet ist, dass** es einen Schritt des Einkapselns der Anordnung, umfassend das Substrat (C4) und die mindestens eine elektronische Komponente (P, P5), aufweist, derart, dass die Dicke der Karte an den Prägebereichen 1,32 mm nicht überschreitet.

11. Verfahren zur Herstellung nach Anspruch 10, wobei die Dicke der Karte an der gesamten oder einem Teil der mindestens einen elektronischen Komponente (P) in mindestens einem der Prägebereiche 0,84 mm überschreitet.

12. Verfahren zur Herstellung nach Anspruch 10 oder 11, wobei die mindestens eine elektronische Komponente (P) angeordnet wird:

   - entweder vollständig in einem der zwei Prägebereiche derart, dass die Karte die Abmessungsspezifikationen, die in den Normen ISO 7810 und ISO 7811-1 definiert sind, einhält,
   - oder teilweise in einem Zwischenbereich, der sich zwischen den zwei Prägebereichen befindet, wobei sich der Zwischenbereich in Längsrichtung auf der Oberfläche der Karte derart erstreckt, um über seine gesamte Länge angrenzend an den zwei Prägebereichen zu sein, wobei die Dicke der Karte an der mindestens einen elektronischen Komponente (P) in dem Zwischenbereich 1,32 mm nicht überschreitet.

**Claims**

1. Card (C2; C3; C4; C5) comprising:

   - a substrate (10;30) of ID-1 format according to the ISO 7810 standard; and
   - at least one electronic component (P1-P2; P3-P5; P6; P10) arranged on the substrate, all or part of said at least one electronic component being disposed in at least one of the two embossing regions (R1, R2) defined in the ISO 7811-1 standard as regions in which embossed characters can be formed on the substrate;

   card **characterized in that** it comprises:

   - an encapsulation of the unit comprising the substrate (10;30) and said at least one electronic component (P1-P2; P3-P5; P6; P10);
   such that the thickness of the card at the level of said embossing regions does not exceed 1.32 mm.

2. Card according to claim 1, wherein the two embossing regions are respectively demarcated by the zones 1 and 2 (Z1, Z2) as stipulated in the ISO 7811-1 standard and have a height (e2) of 0.48 mm.

**3.** Card according to claim 1 or 2, the thickness of the card exceeding 0.84 mm on all or part of said at least one electronic component (P1-P2; P3-P5; P; P10) in at least one of said embossing regions (R1, R2).

**4.** Card (C2; C5) according to any one of the claims 1 to 3, wherein each electronic component (P1-P2; P10) is located entirely in one of said embossing regions (R1, R2) so that the card complies with the dimensional specifications laid down in the ISO 7810 and ISO 7811-1 standards.

**5.** Card (C3) according to any one of the claims 1 to 3 wherein said at least one electronic component (P3-P5) is arranged partially in an intermediate region (R3) situated between the two embossing regions (R1, R2), said intermediate region extending longitudinally so as to be adjacent throughout its length to the two embossing regions situated on either side, wherein the thickness of the card at the level of the intermediate card does not exceed 1.32 mm.

**6.** Card according to claim 5, wherein the thickness of the card at the level of all or part of said at least one electronic component (P3-P5) is strictly greater than 0.84 mm in the intermediate region (R3).

**7.** Card (C5) according to any one of the claims 1 to 6, comprising:

- at least one pressure sensor (32) placed at the location defined by the ISO 7816-1 standard for the external card contacts, said at least one pressure sensor being capable of generating pressure data when it is mechanically coupled to a complementary reading contact of a reading terminal; and
- a processing module (P10) to determine, on the basis of said pressure data, a pressure applied by each reading contact on the corresponding pressure sensor (32), wherein said processing module comprises said at least one electronic component.

**8.** Card according to claim 7, comprising a display module (42) to display a piece of information on the card (C5) representing the pressure applied by at least one reading contact.

**9.** Card according to claim 8, wherein the display module (42) comprises at least one light indicator configured to display said information.

**10.** Method for manufacturing a card (C4) comprising the arrangement of at least one electronic component (P, P5) on a substrate (24) of the card, all or part (P6B) of said at least one electronic component (P5) being disposed in at least one of the two embossing regions defined in the ISO 7811-1 standard as regions in which embossed characters can be formed on the substrate, the method being **characterized in that** it comprises an encapsulation step of the unit comprising the substrate (C4) and said at least one electronic component (P, P5) so that the thickness of the card at said embossing regions does not exceed 1.32 mm.

**11.** Method for manufacturing according to claim 10, wherein the thickness of the card exceeds 0.84 mm at all or part of said at least one electronic component (P) in at least one of said embossing regions.

**12.** Method for manufacturing according to claim 10 or 11, wherein said at least one electronic component (P) is disposed:

- either totally in at least one of the two embossing regions so that the card complies with the dimensional specifications defined in the ISO 7810 and ISO 7811-1 standards;
- or partly in an intermediate region situated between the two embossing regions, said intermediate region extending longitudinally to the surface of the card so as to be adjacent throughout its length to the two embossing regions, wherein the thickness of the card at the level of said at least one electronic component (P) does not exceed 1.32 mm in the intermediate zone.

ART ANTERIEUR
Fig. 1

Fig. 2

Fig. 3

Fig. 4

Fig. 5

Fig. 6

| FOURNITURE PCB | S2 |
| ARRANGEMENT COMPOSANTS SUR PCB | S4 |
| AJOUT RESINE | S6 |

Fig. 7

Fig. 8

## RÉFÉRENCES CITÉES DANS LA DESCRIPTION

**Documents brevets cités dans la description**

- DE 19939003 A1